# EUROPEAN PATENT APPLICATION

(11) **EP 1 903 485 A2**
(43) Date of publication of application: **26.03.2008**
(21) Application number: 07018385.0
(22) Date of filing: 19.09.2007
(51) Int. Cl.: G06Q 10/00, G06Q 30/00

(54) **System and methods for context based navigation**

(30) Priority: 21.09.2006 US 534120
(71) Applicant: SAP Portals Israel Ltd., Ra'anana 43665 (IL)
(72) Inventor: Ronen, Benzi, Ramat Gan (IL)
(74) Representative: Müller-Boré & Partner Patentanwälte

(57) **Abstract**

A system and method to allow a user in a portal environment to obtain content relevant to the user in resolving and investigating alerts and performing tasks is described. In one embodiment, when a user is notified by an alert associated with the user, a content navigation system dynamically asses the needs of the user, and provides the user with navigation links to content related to the alert and to the user. The content may include applications and data associated with the user's system, and/or other systems available to the user. In another embodiment, the system provides the user with one or more recommended navigational data paths that provide the user with the ability to quickly find relevant applications and data in resolving and investigating underlying causes of alerts and performing tasks.

## Description

The present application is related to co-pending Patent Application No. 10/879,484, entitled "Object Based Navigation", filed June 28, 2004, the entire contents of this application is herein incorporated by reference for all purposes.

### BACKGROUND

The present invention relates to the field of human-computer interaction, and in particular to user interfaces and systems in a portal environment for querying databases and presenting references to applications and data to users of the portal environment.

Computer networks have become ubiquitous in business, industry, and education allowing users to search for and process information for a variety of topics and business needs. Development and wide acceptance of the Internet have enabled network resources, accounts and applications to become available from almost anywhere in the world and at virtually anytime. The Internet is most commonly used in the World Wide Web ("The Web") environment.

Businesses of any significant size now see the Internet and effective use of computers as being crucial to their business strategies by allowing them to obtain and process large amounts of data to help supply their customers' needs. Computer networks such as the Internet have enabled a plethora of networks to serve as a platform for global electronic commerce, as seen by the rise of Yahoo!, EBay and Amzaon.com. The Internet enables easy exchange of information between users. The Internet uses the hypertext protocols to present information, which greatly simplifies the information retrieval by users. Such ease of information access allows user's to obtain and process data from a variety of data sources.

Increasing demand for data by businesses from many data sources, systems, and processes has led to a great demand for business or enterprise applications that are used to better organize, store, and process data, and to provide their customers with data relevant to their needs. Increasingly, enterprise applications are being provided in a portal environment due to its ease of use and effectiveness in integrating together complex databases and systems having different formats. One enterprise portal is mySAP.com™ provided by SAP AG. Such portal environments enable a business user query data for their particular business operation from a variety of customer accessible databases. These databases may also be stored in many different geographic locations.

In some situations, users may want to combine data they have retrieved from more than one database to suit a particular need. In an open system, such as the Web, users may obtain information from different sources without modifying the underlying applications that generated the data. Illustratively, a third party independent software vendor (ISP) may provide an application and graphical user interface (UI) to a user that combines demographic data, such as average family income using one application, with a map from another application, to provide a map display of the average income for families within the mapped area. Generally such data combinations are referred to as "mash-ups".

In closed system, such as a enterprise portal environment, where systems and applications are proprietary, and usually accessible to customers of the portal system, users often combine and modify two or more underlying applications to generate a new integrated application that is designed to provide information according to a user's needs. During the development of the new application, developers currently provide fixed "hard coded" navigation links to help users navigate between application windows, functions, and data that suit the user's needs. Such hard coded links are generally determined from, for example, company information, user requests, etc.

Unfortunately, the current approach of integrating applications often relies on the developers having to predetermine (e.g., guess) which hard coded links to use that point users to content which is relevant, and which links will be available upon deployment of the application. In addition, software developers must predict which content is relevant to different users, and predict in a business portal environment, which content will be useful to a particular user in responding to a system alert. For example, developers must predict what content is relevant to users responding to an alert associated with accounting, shipping, engineering, etc.

Generally this approach has been successful with enterprise portal systems with a manageable number of databases, content, alerts, systems, and users. However, as portal systems move toward providing users with meaningful content from data sources inside the portal network combined with content from thousand if not millions of data sources outside the enterprise portal system to solve the user business issues, such as the Internet, predicting and providing content relevant to user needs becomes exponentially more difficult.

Therefore, what is needed is a portal environment which includes a system that dynamically assesses the needs of a user, and provides navigable links to content relevant to the user with respect to the user's needs.

### BRIEF SUMMARY

Embodiments of the present invention include a dynamic content navigation system capable of providing content relevant to a user needs according to a user's attributes such as the user's role in an organization, user profile, etc. and one or more alerts associated with the user. In one embodiment, in response to receiving an alert associated with the user, the content navigation system uses the user attributes to locate content relevant to the user and the alert. The content navigation system determines which business objects are relevant to the user and the alert, and uses user's attributes, alert attributes, and interrelationships between the business objects to provide a navigable data path to those relevant business objects. In an embodiment, the content navigation system ranks the navigable data paths to determine a recommend course of action to the user to resolve the alert and/or investigate underlying causes of the alert. Accordingly, the user is assisted in his operations particularly on which actions need to be taken to address the detected alerts so that the man-machine interaction becomes more efficient. Moreover, the system is dynamically and automatically addressing alerts being generated within the system to display them in such a way to the user that he can more easily and efficiently deal with them, particularly interacting with the computer in response to the output (e.g. displayed) alert.

In one embodiment, the present invention provides a computer-implemented method in a portal environment of dynamically assessing and providing navigational links to applications and data relevant to a user. The method includes receiving a set of user attributes, receiving an alert associated with the user, performing a query in a portal environment using the set of user attributes and alert attributes associated with the alert to locate content relevant to the user, and based on the set of user attributes and the alert attributes, determining at least one navigable data path to content that allows the user to respond to at least a portion of the alert.

In one embodiment, the present invention provides a computer system configured to determine a navigable data path to applications and data relevant to a user of a portal system in investigating and resolving an alert. The computer system includes a processor, a computer readable storage medium coupled to the processor. The computer readable storage medium includes instructions stored therein for directing the processor to provide a user with at least one navigable data path to objects associated with applications and data relevant to the user, and associated with an alert associated with the user. The instructions include code for performing a database query to locate objects pointing to applications and data relevant to user attributes and alert attributes, and code for providing at least one navigable data path for the user to at least one combination of the objects that enables the user to complete at least a portion of the alert.

In one embodiment, the present invention provides a computer-implemented method of generating a navigable data path for users of a portal environment. The method includes detecting an event associated with a portal environment, obtaining user attributes for users of the portal environment associated with the event, obtaining event attributes, querying at least one database using the user attributes and event attributes to generate a set of objects pointing to applications and data associated with at least one user and event, and providing at least one data path from the results of the query to a set of objects that allow the user to at least partially respond to the event. In one further embodiment, there is provided a computer program product, in particular embodied on a computer-readable stotrage medium or as a signal or data stream, comprising computer-readable instructions which, when loaded and executed on a suitable system perform the steps of a method according to the above.

### BRIEF DESCRIPTION OF THE DRAWINGS

FIG. 1 is a simplified block diagram of one embodiment of a system for context based navigation in accordance with embodiments of the invention;

FIG. 2 is a high-level illustration of memory including a context based navigation engine for generating links to content relevant to a user in accordance with embodiments of the invention;

FIG. 3 is a high-level block diagram illustrating a context based navigation system including the context based navigation engine in accordance with embodiments of the invention;

FIG. 4 is a method of generating content relevant to user attributes in response to an alert associated with the user's attributes and alert attributes in accordance with embodiments of the invention;

FIG. 5 is a high-level illustration of a graphical user interface for displaying content relevant to a user in response to an alert in accordance with embodiments of the invention;

FIG. 6 is a high-level illustration of a graphical user interface displaying links and data paths relevant to a user in response to an alert in accordance with embodiments of the invention;

FIG. 7 is a high-level illustration of a graphical user interface displaying one process for a user response to an alert in accordance with embodiments of the invention;

FIG. 8 is a high-level illustration of a graphical user interface displaying navigable data paths to objects pointing to content, where one data path is a system recommended data path in accordance with embodiments of the invention;

FIG. 9 is a high-level illustration of a graphical user interface for selecting data relevant to an alert in accordance with embodiments of the invention;

FIG. 10 is a high-level illustration of a graphical user interface for navigating to relevant content along a data path in accordance with embodiments of the invention; and

FIG. 11 is a high-level illustration of a graphical user interface for selecting specific data relevant to an alert in accordance with embodiments of the invention.

These and other embodiments of the invention are described in further detail below.

### DETAILED DESCRIPTION OF EXEMPLAR EMBODIMENTS

Embodiments of the present invention include a content navigation system capable of assessing a user's needs with respect to alerts associated with an enterprise portal system. The content navigation system enables the user to investigate and/or resolve the alerts by providing the user with target content information relevant to the alerts, and a user's attributes. In one embodiment, in response to a user's attributes and a system alert, the context navigation system performs a query that locates objects pointing to target content relevant to the user's attributes and to the alert. In one embodiment, the content navigation system generates a user interface file (e.g., XML file) that may be used to provide a user with a user interface (UI) displaying at least one navigable data path to relevant content that may assist the user in responding to the alert. Users within a business organization having different attributes may be provided with different content relevant the alert and to each user's attributes. Accordingly, each user may be provided with different navigable data paths to resolve the alert with respect to their particular role in the organization. Furthermore, performing a query may comprise comparing metadata of at least one of the users and metatdata of the system alert with metadata of the (relevant) content to determine within a prefdefined tolerance what content is relevant to the user. The predefined tolerance may comprise given or predefined boundaries and/or choices such as predefined user modifications, predefined user paths (to locate the content), predefined context services, and are predefined which applications relate to a certain alert (e.g. the system alert).

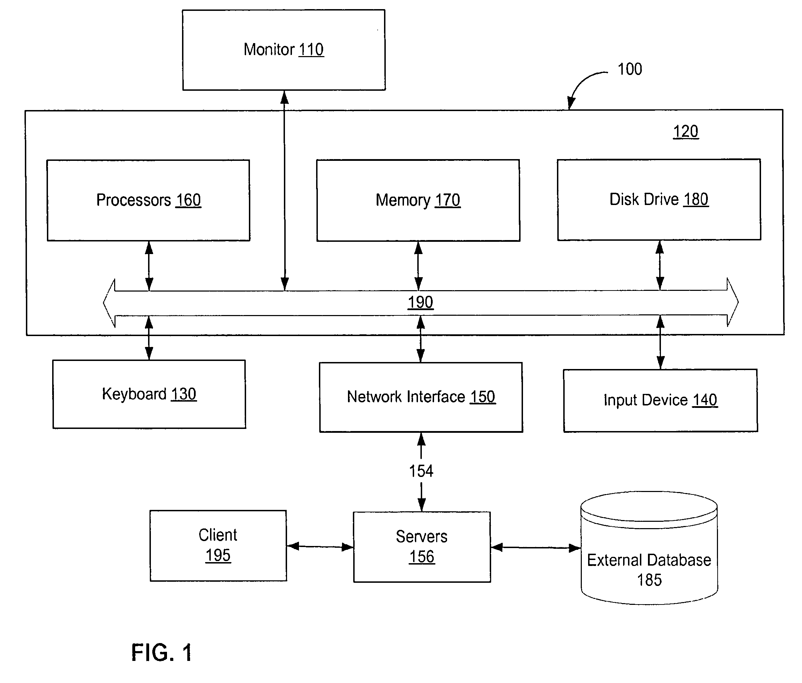

Fig. 1 is a block diagram of a context navigation system **100** according to an embodiment of the present invention. context navigation system **100** depicted in Fig. 1 is merely illustrative of an embodiment incorporating the present invention and is not intended to limit the scope of the invention as recited in the claims. One of ordinary skill in the art would recognize other variations, modifications, and alternatives.

In one embodiment, context navigation system **100** includes a display device **110** such as a monitor, computer **120**, a keyboard **130**, a user input device **140**, a network communication interface **150**, and the like. In one embodiment, user input device **140** is typically embodied as a computer mouse, a trackball, a track pad, wireless remote, and the like. User input device **140** typically allows a user to select objects, icons, text and the like that appear on the monitor **110**.

Embodiments of network interface **150** typically include an Ethernet card, a modem (telephone, satellite, cable, ISDN), (asynchronous) digital subscriber line (DSL) unit, and the like. Network interface **150** is typically coupled to a communication network **152**, such as the Internet, to one or more servers **156** and/or database **185** that may be located outside the context navigation system **100**. In other embodiments, network interface **150** may be physically integrated on the motherboard of computer **120**, may be a software program, such as soft DSL, or the like.

In one embodiment, source code for an application is deployed and stored on server **154**. Server **154** is configured to serve the source code to context navigation system **100** over, for example, communication network **152** in response to a request for the application such as a webpage from server **154**. In one embodiment, the client program that executes the application is a browser application.

In one embodiment, context navigation system **100** may also include software that enables communications over communication network **152** such as the HTTP, TCP/IP, RTP/RTSP, protocols, wireless application protocol (WAP), and the like. In alternative embodiments of the present invention, other communications software and transfer protocols may also be used, for example IPX, UDP or the like. In one embodiment, communication network **152** may include a local area network, a wide area network, a wireless network, an Intranet, the Internet, a private network, a public network, a switched network, or any other suitable communication network.

Communication network **152** may include many interconnected computer systems and communication links such as hardwire links, optical links, satellite or other wireless communications links, wave propagation links, or any other suitable mechanisms for communication of information.

Computer **120** typically includes familiar computer components such as a processor **160**, and memory storage devices, such as a memory **170**, e.g., random access memory (RAM), disk drives **180**, and system bus **190** interconnecting the above components. In one embodiment, computer **120** is a PC compatible computer having multiple microprocessors. While a computer is shown, it will be readily apparent to one of ordinary skill in the art that many other hardware and software configurations are suitable for use with the present invention.

Memory **170**, disk drives **180**, and database **185**, and are examples of tangible media for storage of data, audio/video files, computer programs, embodiments of the herein described invention including test panel engine, reporting engine, report display engine, and the like. Other types of tangible media include floppy disks, removable hard disks, optical storage media such as CD-ROMS and bar codes, semiconductor memories such as flash memories, read-only-memories (ROMS), battery-backed volatile memories, networked storage devices, and the like.

In one embodiment, as described below, memory **170** includes context navigation engine **172**. In an embodiment, context navigation engine **172** may be a separate application or may be part of another software application. For example, context navigation engine **172** may be part of a search engine on a server machine, or may be part of a client side application communicating over a network, such as network **152**.

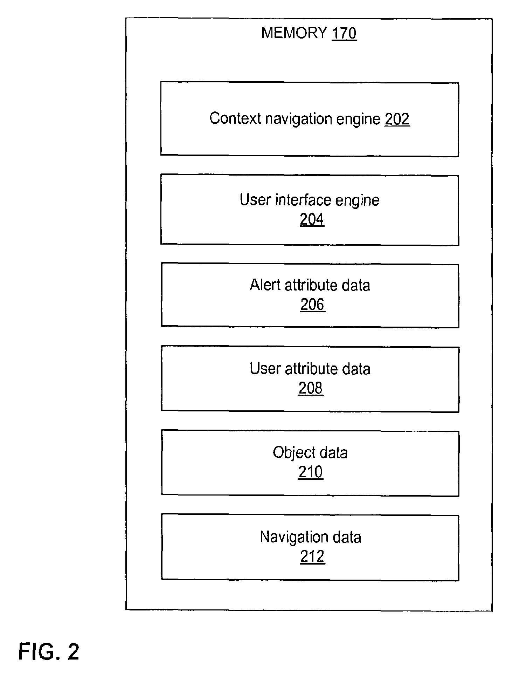

FIG. 2 is a high-level illustration of memory **170** which includes context based navigation engine **202**, a user interface engine **204**, alert attribute data **206**, user attribute data **208**, object data, and content navigation path data **210**. As described further below, context navigation engine **172** is a software engine that facilitates a user in generating content relevant to the user's particular business problem, informational need, etc in response to an alert or task associated with the user.

User interface engine **204** may be any suitable data interface application, such as a web server capable of serving data to a browser or other graphical user interface (GUI) such as a portal user interface, portal snippets, FRAMEWORK page, and the like. Such user interface programs are generally resident on a client **195** capable of displaying content such as HTML to the user in the form of graphical interface such as a webpage. Portal snippets such as iVIEWS, are presentation components that may perform certain operations to retrieve and view data.

Alert attribute data **206** includes data having context relevant to one or more alerts. For example, alert data may contain system events, business process events, time events, date events, and the like. In one embodiment, alert attribute data **206** may include alerts pertaining to events specific to the user's systems, such as a customer's enterprise software system, or to alerts pertaining to events that may occur outside the user's system. For example, alert attribute data **206** may contain data pertaining to an internal factor such as an accounting error within the user's accounting process, or may contain data pertaining to an external factor, such as a hurricane disrupting a shipping line the user employs to ship products to customers. Such alerts may include for example, alerts pertaining to weather, manufacture flow, materials, incoming receiving, and the like. Alert attribute data 206 may be stored in any suitable form such as in the form of metadata, objects, and the like.

User attribute data **208** relates to data having context associated with the user such as the user's personal profile, business role, access level, content presentation, priority level, association with tasks, association with alerts, association with events, association with applications, history of alert resolution, and the like. For example, user attribute data **208** may contain data pertaining to a shipping manager who's role it is to make sure that products are shipped to customers, who has access to information related to shipping and receiving, weather forecasting, shipping lines, warehousing, manufacturing, etc., and who is interested in alerts pertaining to factors that may affect shipping such as weather alerts, manufacturing alerts, material alerts, etc.

In one embodiment, user attribute data **208** is stored in a session container that maintains the user's metadata from sessions to session. The session container may be configured with a common interface or handshake useable with the business objects located by context navigation engine **202**, such that the user's metadata may be usable by internal and external applications.

Object data **208** may include business objects, or just "objects", which are a module or set of instructions that are modeled to perform a certain task or behavior. Business objects may represent a concept, thing, process, content, event, task, etc., associated with an organizations operation, planning, accounting, sales, and the like. Each business model object specifies attributes, relationships, and actions/events. For example, business objects may be used to represent purchase orders, suppliers, system users, applications, etc.

Navigation data **208** may include links between objects that define one or more navigable data paths described further below. For example business objects may be linked such that users may dynamically pass content from one content source to another. Business objects may be linked such that a purchase order object may be linked to a sales order, to a customer, to a product, etc. Such business object navigation allows a user to efficiently locate contextually relevant content as described further below.

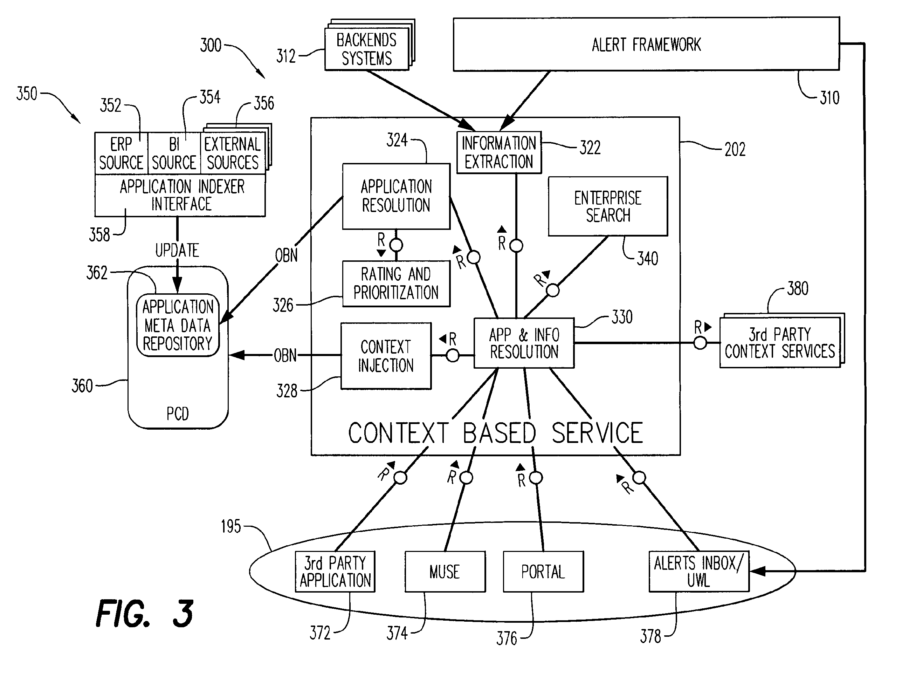

FIG. 3 is a high-level block diagram illustrating a context based navigation system **300**. Context based navigation system **300** may include context navigation engine **202**. In one embodiment, context navigation engine **202** provides a context based service to one or more clients **195**, an alert framework **310**, communication to backend systems **312**, application interface **350**, portal content directory (PCD) **360**, and may communicate with third-party context services **380**.

Context navigation engine **202** may also be configured to manage incoming requests from alerts and users, process the requests, and provide content relevant to client **195**. For example, in response to a system alert, context navigation engine **202** provides client **195**, one or more navigable data paths with content contextually relevant to a user and the alert though a third party applications **372**.

In one embodiment, the navigable data paths may be displayed on third party applications **372** such as browser interface, a MUSE interface **374** which allows users applications from their Macintosh, Linux or Windows desktops and from mobile devices, a portal **376**, and through a UNIVERSAL WORKLIST (UWL) **378** which provides users a unified and centralized way to access their work and the relevant information in portal **376**.

In other embodiments, context navigation engine **202** may supply navigable data paths for use by third party applications such as GOOGLE MAPS, EBAY auction applications, other enterprise portal applications, etc. through client **195** to allow such third party applications to perform mash-ups. For example, navigable data paths with third party access may be used by other applications to form mash-ups with contextually relevant content from inside and outside the user's enterprise portal system. Illustratively, a third party may mash-up sales office locations associated with the portal system user with a mapping program outside the portal system, to generate a map of the sales locations for use by the third party.

In order to locate and generate contextually relevant content, context navigation engine **202** may employ enterprise search engine **340**. Enterprise search engine **340** may be configured to query internal data sources and external data sources, such as external database **185**. Query results may be used as part of relevant content presented to the user as described herein. Enterprise search engine **340** may also be used in parallel with context navigation engine **202** to provide the user with other data that may not be contextually relevant, but may be associated. For example, the user may use enterprise search engine **340** as a conventional search engine to run a query to locate types of accounting software similar to what is used in the portal system.

In one embodiment, context navigation engine **202** may include an application and content resolution engine **330**. As described herein, application and content resolution engine **330** may be used to receive one or more alerts internal and external to the portal system, and provide contextually relevant content to users via client **195**. Application and content resolution engine **330** is coupled to an information extraction engine **322**, an application resolution engine **324**, a context injection engine **328**, third party context services **380**, and client **195**, as described further below.

Application and content resolution engine **330** may be configured as a core process used to process alert attributes, perform queries to determine which applications are information are relevant to a user associated with the alert, and provide navigable data paths to relevant content to a user via client **195**. In an embodiment, application and content resolution engine **330** maps application metadata with user metadata (e.g., user attributes) and alert metadata (e.g., alert attributes) to determine which content is contextually relevant for a particular user and associated alerts.

Alert framework **310** may generate an alert based on rules governing a particular business process, system event, etc. and associates alert attributes **206** to the alert, and pass the alert attributes to information extraction engine **322**. Alert framework may be system driven by detecting system interrupts, for example, or may generate an alert from another source such as a user initiated alert. For example, an accounting alert may be driven by an accounting application when a certain data threshold is reached (e.g., account is past due), or may be derived from a user in sales who wants to give manufacturing advance notice that a sale has been made before the purchase is entered. Alert framework **310** may also provide direct alerts to users, for example, via an email transmitted to client **195**.

In one embodiment, information extraction engine **322** normalizes, enhances, and extends alert attributes **206** using for example, backend systems **312**. For example, in response to alert framework **310** generating an accounting alert, information extraction engine **322** extracts attributes about the accounting alert, such as which purchase order is affected, and may extract related content from for example, a vendor database to determine which vendors are associated with the purchase order, or data from an external database **185**.

In order to determine which applications to present to the client in relation to an alert, application and content resolution engine **330** may be configured to retrieve application data from application resolution engine **324**. Application resolution engine **324** may process information pertaining to applications with the alert attributes **206**, enhanced by information extraction engine **322**, to determine, for example, which applications are best suited for solving a particular alert. In one embodiment, application resolution data engine **324** resolves the appropriate applications based on any number of suitable factors such as business objects, event context, role of a user, and may prioritize the alert according to ratings and prioritization data from a rating and prioritization engine **326**.

In one embodiment as illustrated, application resolution engine **324** may be coupled to portal content directory (PCD) **360**. Portal content directory (PCD) **360** may include a data repository **362** that stores for example, metadata related to applications accessible to context navigation system 100 through application interface **350**. Application interface **350** is configured to obtain application data from a variety of applications either associated with the portal system, or not associated with the portal system such as applications from networks outside the portal system network. For example, application interface **350** may be in communication with and obtain attributes related to enterprise resource planning (ERP) applications **352,** business intelligence (BI) applications **354**, or other external applications **356**.

In embodiments of the present invention, portal content directory **360** may also be updated by application and content resolution engine **330.** Application and content resolution engine **330** may communicate with context injection engine **328** to enhance, extend, or clarify application data stored in for example, data repository **362**. For example, consider the case where application data specifies all sales with the same application data. Context injection engine **328** in cooperation with application and content resolution engine **330** may extend the application to separate applications for example, used with automobile sales from those application used in camping equipment sales.

Context navigation engine **202** may use any number of suitable search schemas to communicate and query portal content directory **360**. For example, context navigation engine **202** may query portal content directory **360** using business objects as the targets. Such business object query may be performed using "object based navigation" (OBN) incorporated herein.

In one embodiment, application and content resolution engine **330** may employ third party context services **380** to help determine which content is relevant to a user with regard to an event the user is responding to. For example, such third part context services **380** may provide metadata on third party applications that the user may not normally have access to. Such third party context services **380** may also provide other users outside the enterprise portal system access to content from the portal system to perform mash-ups of portal data with portal system data.

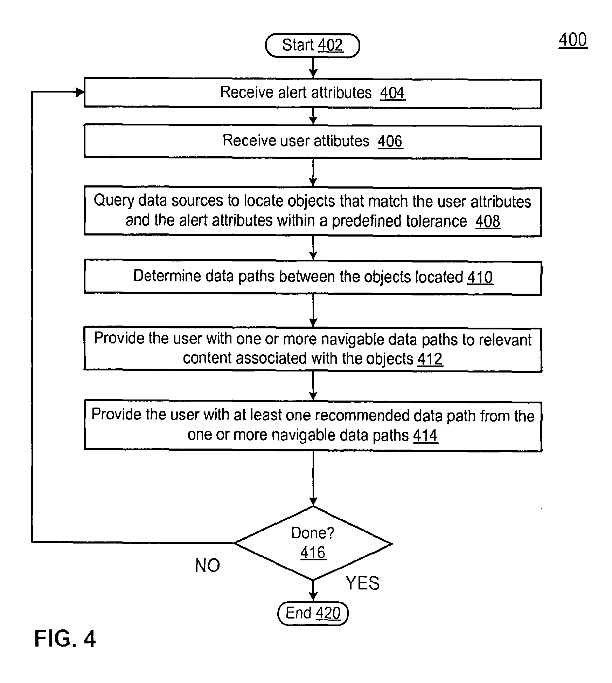

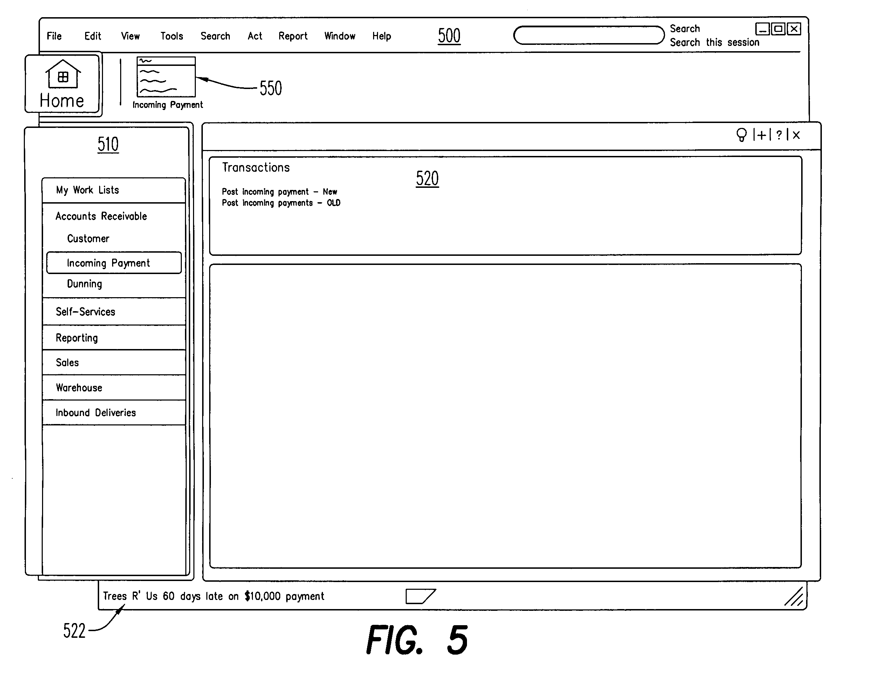

FIG. 4 is a method **400** of generating content relevant to user attributes in response to an alert associated with the user's attributes and alert attributes. Method **400** may be entered into at step **402** by a user's operating context navigation system **100** via a user interface **500** as illustrated in FIG. 5. Such a user interface **500** may include a navigation window **510** to enable a user to list operations the user is currently associated with, for example, accounts receivable, sales, etc. User interface **500** may also include data view window **520** used to supply the user for example, with data relevant to an alert and the user as described herein.

At step **404,** alert attributes are received for example by alert framework **310.** For example attributes pertaining to an alert **522** within user interface **500** are received. In this illustration the alert is used in alerting a user that a customer "Trees R' us is sixty days late on $10,000 payment". Accordingly, alert attributes may include the customer's name "Trees R'us", the type of transaction such as "payment", date attributes such as "late", amount of payment such as "$10,000", and the like. Such alert attributes maybe stored for example, in alert attribute data **206**. At step **406**, the user's attributes are retrieved from, for example, user-attribute data **208**. In one embodiment, alert attributes may be refined and enhanced using information extraction engine **322**. In order to act on the alert, the user may select the alert **522** using for example, a mouse, a pointer, and the like.

At step **408,** a query is run to determine which applications and content are relevant to the user and the associated event. For example, referring to FIG. 3, context navigation engine **202** may utilize the alert attributes and the user attributes to query portal content directory **360**, external databases **185**, and the like. In one embodiment, context navigation engine **202** may employ enterprise search engine **340** to find such applications. Enterprise search engine **340** may be configured to query internal and external data sources using any number of suitable database and query schemas.

Referring to FIG. 4, at step **410**, one or more navigable data paths are determined from the results of the query at step **408**. In one embodiment, the interrelationships of the business objects are utilized to generate links between the objects. For example, context navigation engine **202** may utilize object based navigation to generate a list of objects and their links.

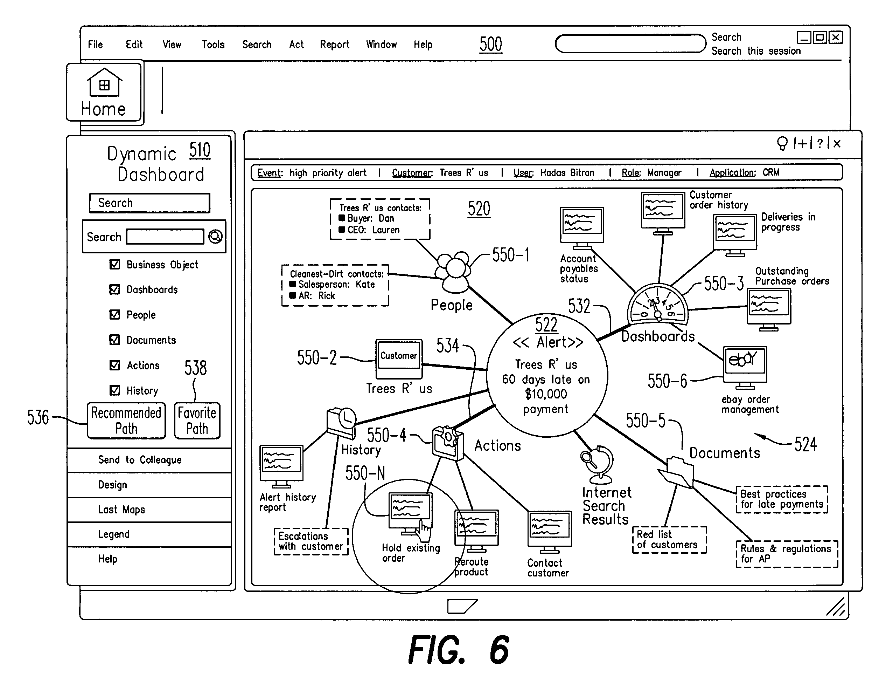

At step **412**, a user is provided the relevant data and links. For example, after the user has selected alert **522** from FIG. 5, as illustrated in FIG. 6, a data window **520** is open that displays a plurality of navigable data paths **524**. For example as illustrated navigable data paths **524** may be a graphical view of business objects linked together in a mind-map format extending from alert **522**. While a mind-map structure is illustrated, those skilled in the art will appreciate that such data may be provided in a number of different ways. For example, as described above, such object data may be put into a XML format for use by a variety of applications.

As illustrated in FIG. 6, business objects may be displayed graphically in such a way as to provide additional information to a user, such as people **550-1**, customers **550-2**, dashboards **550-3**, actions **550-4**, documents **550-5**, external sources **550-6**, and processes **550-N**, where "N" indicates a plurality of business objects.

In one embodiment, business objects may be analytics where upon selection by a user new windows such as a portal snippet, may be open showing results of analytical data analysis. For example, selecting dashboard **550-3** may open other windows that display the number of sales relevant to external sources **550-6**, a map of the sales by region, sales with relations to billboard ads in a given region, etc.

A recommended data path **532** may be determined at step **414**. For example, as illustrated in FIG. 6, recommended data path **532** connects alert **522** to business object **550-3**, and alert **522** to actions **550-3**. In one embodiment, recommended paths **532** and **534** may displayed by operating a recommended path button **536**. In other embodiments, a user may define a path as a favorite path by selecting at least one business object coupled to the alert **522** and operating favorite path button **538**. At step **416** of method **400** is finished it ends at step **420**. If method **400** is not finished, the method **400** returns to step **404**.

In one embodiment, context navigation engine **202** may collect data on past navigation behavior to allow context navigation engine **202** to provide data for future similar queries. For example, as each user navigates through the navigable data paths **524**, context navigation engine **202** may track where each user is navigating such that context navigation engine **202** learns from each user. Paths that are commonly used for similar alerts may be ranked and stored for a future query. Therefore, context navigation engine **202** may use past navigation to learn from each user and provide a more precise query for similar alerts in the future.

A user's may also use their knowledge in other embodiments of the present invention to refine and modify rules and methods used in generating navigable data paths **524** and recommend paths such as recommended path **534**. In this embodiment, as a user accesses business objects related to a particular data path, the user can modify the business objects and rules selecting the business objects to further clarify the business object and/or rank the business objects with respect to its importance in resolving an event. For example, referring to FIG. 6, some of the data paths may be only slightly relevant to the alert. The user in this case may edit the object to "de-list" or delete the object from the data paths. Or alternatively, an experienced user who knows about a relevant object that is not listed, may add the object to the data paths. Similarly, data from favorite paths **528** from users may be collected and utilized to enable context navigation engine **202** to refine the process of recommending data paths. This is advantageous, as such processes allow context navigation system 202 to learn from experienced users, and pass on valuable information to less experienced users.

### Investigating and Resolving Alerts using Navigable Data Paths

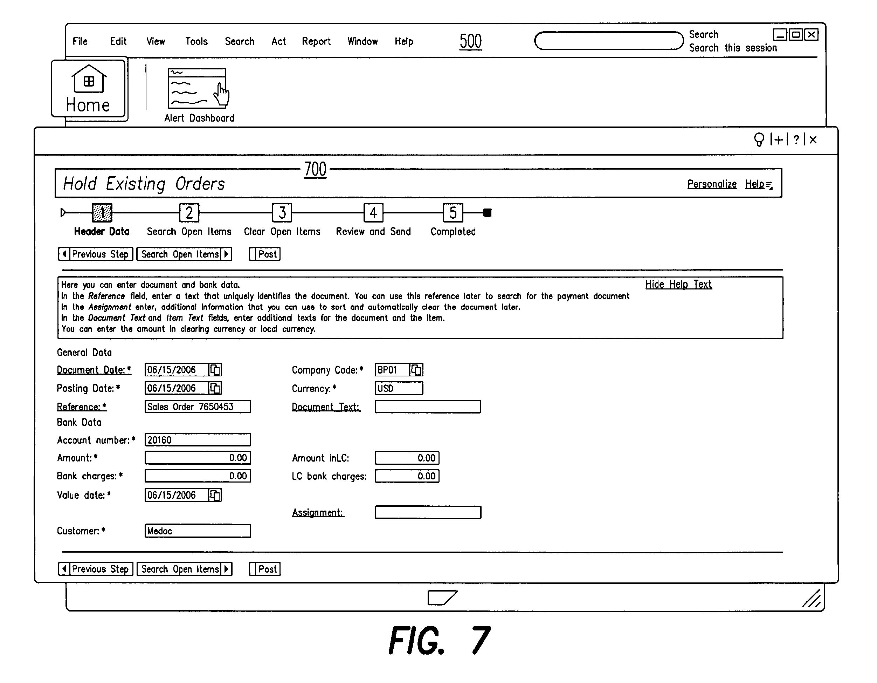

As illustrated in FIGs. 7-11, a user may use the navigable data paths **524** and related applications to resolve alerts. For example, in the current illustration of FIG. 5, an alert was provided to a user with regards to a late payment from a customer. In order to resolve the late payment alert, as illustrated in FIG. 6 and FIG. 7, a user may select any navigable data paths **524** associated with the alert to resolve and investigate causes of the alert. As described below, some data paths **524** lead to causes of the alerts, while other data paths **524** assist a user in resolving the alerts.

For example, if the user selects the recommend data path **532**, a user may select business object **550-N** pertaining to holding existing orders, which opens a new window **700**. Such new window **700** allows the user to hold the orders of the customer which resolves the alert and issue of having future alerts based on the customer's payment history. In this case, using the recommended data path **532** has enabled the user to resolve the alert **522** without the need to investigate the underlying cause.

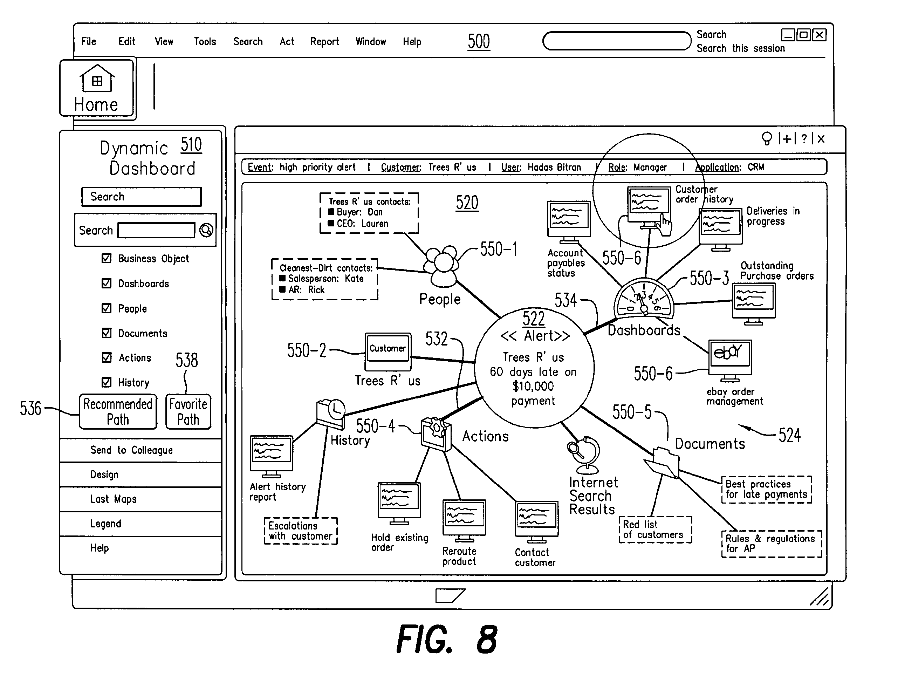

The user may also select the other recommended data path **534** to ascertain further information pertaining to the underlying cause of alert **522**. For example, as illustrated in FIG. 8, the user may select business object **550-6** "customer order history". In response to selecting business object **550-6**, a new window **900** is generated that displays content relevant to the customers order history. As illustrated in data line **910**, the customer in question "Trees R' Us" is associated with an employee "Tommy Barry", where the status of a credit check is "pending".

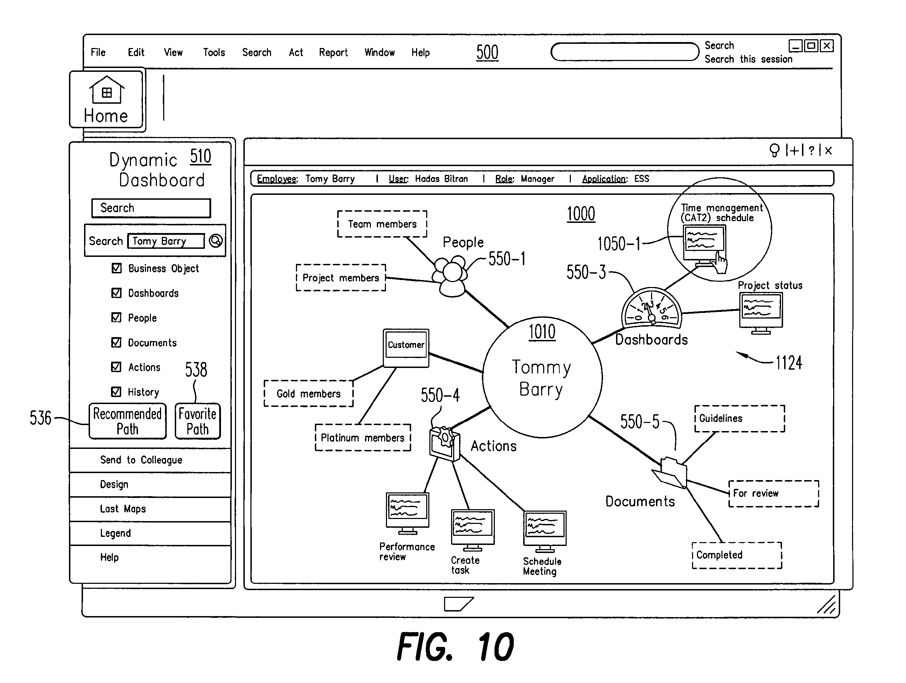

In one embodiment, the user is presented with a navigable link **920** in data line **910** to open another data view window **1000** illustrated in FIG. 10. Data view window **1000** displays a plurality of data paths **1124** that are linked to the employee business object "Tommy Barry" **1010**. In this illustration, another mind-map is used to display navigable data paths **1124** associated with employee business object **1010**. Similarly to navigable data paths **524**, the user may use the navigable data paths **1124** with linked business objects to further investigate employee business object **1010**.

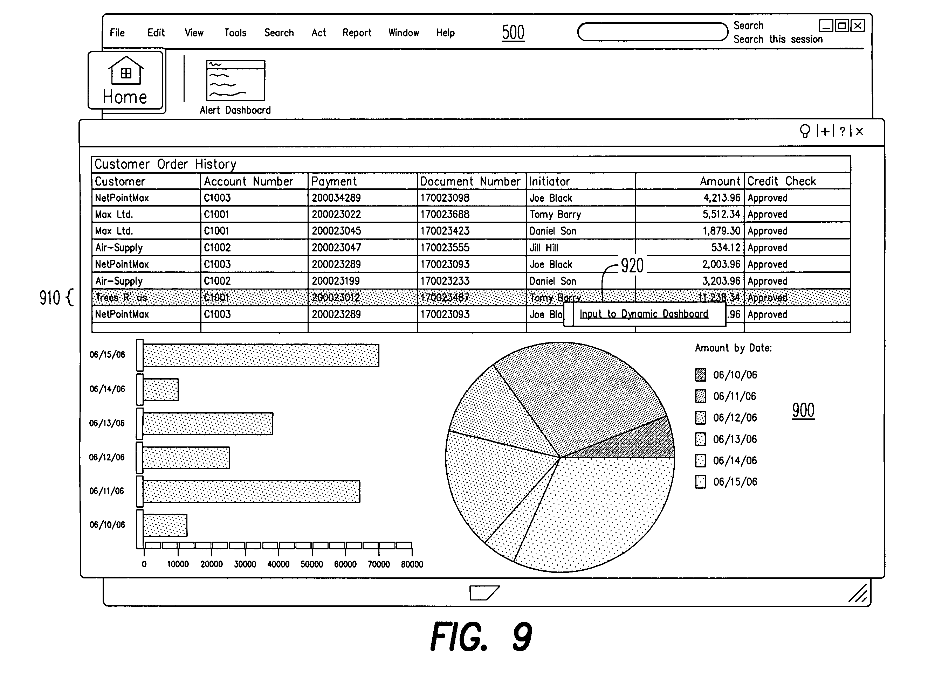

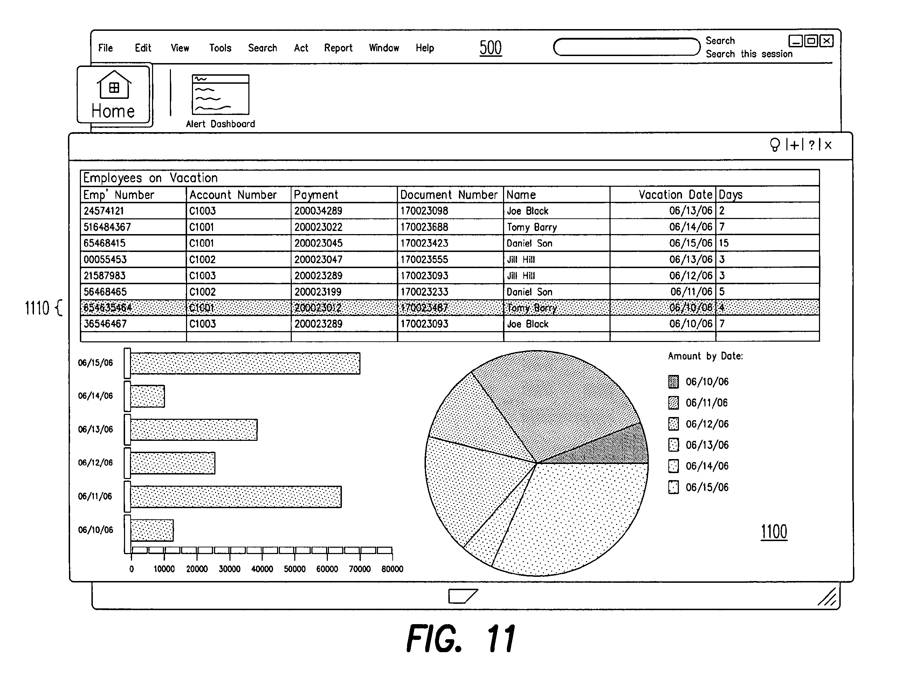

As illustrated in FIG. 10, to further investigate the underlying causes of alert **522**, a user may selects a business object **1050-1** "time management schedule" to open a new window **1100** illustrated in FIG. 11. In this illustration, data line **1100** displays employee business object **1010** "Tommy Barry" on vacation. From this data, the user may deduce that the late payment alert **522** was caused by Tommy Barry being on vacation as, from FIG. 9, he had not completed a credit check.

Any of the above described steps may be embodied as computer code on a computer readable medium. The computer readable medium may reside on one or more computational apparatuses and may use any suitable data storage technology.

The present invention can be implemented in the form of control logic in software or hardware or a combination of both. The control logic may be stored in an information storage medium as a plurality of instructions adapted to direct an information processing device to perform a set of steps disclosed in embodiment of the present invention. Based on the disclosure and teachings provided herein, a person of ordinary skill in the art will appreciate other ways and/or methods to implement the present invention.

The above description is illustrative but not restrictive. Many variations of the invention will become apparent to those skilled in the art upon review of the disclosure. The scope of the invention should, therefore, be determined not with reference to the above description, but instead should be determined with reference to the pending claims along with their full scope or equivalents.

A recitation of "a", "an" or "the" is intended to mean "one or more" unless specifically indicated to the contrary.

All patents, patent applications, publications, and descriptions mentioned above are herein incorporated by reference in their entirety for all purposes. None is admitted to be

prior art.

## Claims

1. A computer-implemented method in a portal environment of dynamically assessing and providing navigational links to applications and data relevant to a user in resolving alerts, the method comprising:
receiving a set of user attributes;
receiving an alert associated with the user;
performing a query in a portal environment using the set of user attributes and alert attributes associated with the alert to locate content relevant to the user; and
based on the set of user attributes and the alert attributes, determining at least one navigable data path to content that allows the user to respond to at least a portion of the alert.

2. The method of claim 1, wherein the user attributes comprise metadata about the user.

3. The method of claim 1 or 2, wherein the alert attributes comprise metadata about the alert.

4. The method of any one of the preceding claims, wherein the alert comprises one or more alerts associated with the portal system.

5. The method of any one of the preceding claims, wherein the content comprises at least one business objects stored within a portal system database.

6. The method of any one of the preceding claims, wherein the content comprises at least one business objects stored external to the portal system.

7. The method of any one of the preceding claims, wherein performing the query comprises comparing metadata of the user and metadata of the alert with metadata of the content to determine within a predefined tolerance what content is relevant to the user.

8. The method of any one of the preceding claims, wherein determining the at least one navigable data path comprises ranking a plurality of data paths.

9. A computer system configured to determine a navigable data path to applications and data relevant to a user of a portal system in investigating and resolving an alert, the computer system comprising:
a processor;
a computer readable storage medium coupled to the processor, wherein the computer readable storage medium includes instructions stored therein for directing the processor to provide a user with at least one navigable data path to objects associated with applications and data relevant to the user, and associated with an alert associated with the user, the instructions comprising:
code for performing a database query to locate objects pointing to applications and data relevant to user attributes and alert attributes; and
code for providing at least one navigable data path for the user to at least one combination of the objects that enables the user to complete at least a portion of the alert.

10. The computer system of claim 9, wherein code for performing the database query comprises code for comparing alert metadata and user metadata to application metadata to determine a relevance between the alert metadata, user metadata, and application metadata.

11. The computer system of claim 9 or 10, further comprising code for storing a user's metadata in a session container.

12. The computer system of any one of the preceding claims 9 to 11, further comprising code for ranking the objects according to the objects relevance to the user attributes and alert attributes.

13. The computer system of any one of the preceding claims 9 to 12, wherein code for extracting application metadata from applications independent of the portal system.

14. The computer system of any one of the preceding claims 9 to 13, wherein code for providing the at least one navigable data path comprises code for ranking a plurality of navigable data paths to determine a recommended data path to a user.

15. A computer-implemented method of generating a navigable data path for users of a portal environment, the method comprising:
detecting an event associated with a portal environment;
obtaining user attributes for users of the portal environment associated with the event;
obtaining event attributes;
querying at least one database using the user attributes and event attributes to generate a set of objects pointing to applications and data associated with at least one user and event; and
providing at least one data path from the results of the query to a set of objects that allow the user to at least partially respond to the event.

16. The method of claim 15, wherein the user attributes comprise metadata about the user.

17. The method of claim 16, wherein the metadata comprises metadata pertaining to a user's organizational role, or a user's status, or a user's portal access.

18. The method of any one of the preceding claims 15 to 17, wherein the event attributes comprise metadata pertaining to the portal environment, or metadata pertaining to events external to the portal environment.

19. The method of any one of the preceding claims 15 to 18, wherein querying the at least one database comprises querying databases associated with the portal environment and querying databases external to the portal environment.

20. The method of any one of the preceding claims 15 to 19, wherein providing the at least one data path comprises ranking a plurality of user navigable data paths to determine at least one recommended data path.

21. A computer program product comprising computer-readable instructions which, when loaded and executed on a suitable system perform the steps of a method according to any one of the preceding claims 1 to 8 and 15 to 20.
